# EUROPÄISCHE PATENTSCHRIFT

(11) **EP 4 582 723 B1**
(45) Veröffentlichungstag und Bekanntmachung des Hinweises auf die Patenterteilung: **21.10.2026**
(21) Anmeldenummer: 25169799.1
(22) Anmeldetag: 30.11.2020
(51) Int. Cl.: F16K 11/085, F16K 11/16, F01P 7/14, F16K 31/53, F16K 31/528, F16K 5/04

(54) **MEHRWEGEVENTIL**
MULTIWAY VALVE
SOUPAPE À VOIES MULTIPLES

(30) Priorität: 19.12.2019 DE 102019135041; 24.06.2020 DE 102020116597
(43) Veröffentlichungstag der Anmeldung: 09.07.2025
(62) Dokumentnummer(n) der früheren Anmeldung(en) nach Art. 76 EPÜ: 20823743.8 / 4 077 989
(73) Patentinhaber: HELLA GmbH & Co. KGaA, 59552 Lippstadt (DE)
(72) Erfinder: TIEMEYER, Sebastian, 44143 Dortmund (DE); SUNDERMEIER, Verena, 33129 Dellbrück (DE)
(74) Vertreter: Behr-Wenning, Gregor

(56) Entgegenhaltungen:
- CN-A- 103 939 643
- FR-A1- 2 949 527
- US-A1- 2006 118 066
- US-A1- 2018 372 235

## Beschreibung

Die vorliegende Erfindung bezieht sich auf ein Mehrwegeventil.

Mehrwegeventile sind in der Technik in voneinander verschiedenen Ausführungsformen weit verbreitet und dienen zur Steuerung von komplexen Fluidströmen in einer Vielzahl von Anwendungsfällen. Mittels eines Mehrwegeventils ist es möglich, eine Kombination von einer Mehrzahl von Einwegventilen zu ersetzen. Beispielsweise finden Mehrwegeventile Anwendung in der Ansteuerung von komplexen Fluidsystemen mit Fluidkreisläufen bei Fahrzeugen. Auch neuere Kraftfahrzeugkonzepte für Landfahrzeuge, wie beispielsweise Hybrid- oder Elektroautos, verfügen über derart komplexe Fluidsysteme mit Fluidkreisläufen. Bei den Fluidkreisläufen kann es sich zum Beispiel um Kühlkreisläufe und/oder Heizkreisläufe handeln, wobei derselbe Fluidkreislauf gleichzeitig als Kühlkreislauf und als Heizkreislauf ausgebildet sein kann. Je nach Betriebsmodus kann es erforderlich sein, Fluidkreisläufe eines derartigen Fluidsystems zu schließen oder zu öffnen, miteinander zu verbinden oder voneinander zu trennen. Bei der Verwendung von üblichen Mehrwegeventilen sind dafür dann eine Mehrzahl von Mehrwegeventilen, beispielsweise von 3/2- oder 4/2-Wege-Ventile, erforderlich. US2018372235A1 offenbart ein Mehrwegeventil gemäß dem Oberbegriff des Anspruchs 1. US2006118066A1 offenbart ein weiteres Beispiel für ein Mehrwegeventil.

Hier setzt die vorliegende Erfindung an.

Der vorliegenden Erfindung liegt die Aufgabe zugrunde, ein Mehrwegeventil zu verbessern.

Diese Aufgabe wird durch ein Mehrwegeventil mit den Merkmalen des Anspruchs 1 gelöst, wonach das Mehrwegeventil ein Gehäuse mit einer Mehrzahl von Gehäuseöffnungen jeweils zur strömungsleitenden Verbindung mit einem externen Strömungskanal für ein Fluid und einen in dem Gehäuse um eine Drehachse drehbar angeordneten Ventilkörper zur strömungsleitenden Verbindung von mindestens zwei der Gehäuseöffnungen des Gehäuses umfasst, wobei zwischen dem Gehäuse und dem Ventilkörper eine Dichtung mit zu den Gehäuseöffnungen in dem Gehäuse korrespondierenden Dichtungsöffnungen zur Abdichtung der strömungsleitenden Verbindungen gegenüber der freien Umgebung angeordnet ist, und wobei der Ventilkörper eine erste Ebene mit mindestens einem sich lediglich über die erste Ebene erstreckenden ersten Verbindungskanal und eine parallel zu der ersten Ebene angeordnete zweite Ebene mit mindestens einem sich lediglich über die zweite Ebene erstreckenden zweiten Verbindungskanal aufweist, wobei die Verbindungskanäle voneinander strömungstechnisch getrennt sind und mittels einer Drehung des Ventilkörpers in eine jeweils vorher festgelegte Drehlage des Ventilkörpers jeweils mit mindestens zwei der Gehäuseöffnungen des Gehäuses strömungsleitend verbindbar sind, und wobei der Ventilkörper mindestens einen dritten von den ersten und zweiten Verbindungskanälen strömungstechnisch getrennten Verbindungskanal aufweist, wobei sich der dritte Verbindungskanal über die erste und die zweite Ebene erstreckt und als ein zentraler Kanal ausgebildet ist, der geeignet ist, um diametral einander gegenüberliegende und jeweils einer der beiden Ebenen zugeordnete Gehäuseöffnungen miteinander strömungsleitend zu verbinden, wobei der Ventilkörper einteilig ausgebildet ist und die erste Ebene zwei erste Verbindungskanäle und die zweite Ebene drei zweite Verbindungskanäle aufweisen. Die Unteransprüche betreffen vorteilhafte Weiterbildungen der Erfindung.

Ein wesentlicher Vorteil des erfindungsgemäßen Mehrwegeventils liegt insbesondere darin, dass das Mehrwegeventil verbessert ist. Mittels des erfindungsgemäßen Mehrwegeventils ist es möglich, eine Mehrzahl von externen Strömungskanälen eines Fluidsystems mit beispielsweise einer Mehrzahl von Fluidkreisläufen auf konstruktiv und schaltungstechnisch einfache Art und Weise anzusteuern. Mittels der Erfindung ist es somit möglich, eine Mehrzahl von üblichen Mehrwegeventilen einzusparen und durch lediglich ein einziges erfindungsgemäßes Mehrwegeventil zu ersetzen. Entsprechend sind der Montageaufwand und die Kosten sowie der dafür erforderliche Bauraum reduziert. Mittels des mindestens einen dritten Verbindungskanals ist eine die erste und die zweite Ebene verbindende und damit eine Verbindung der diesen Ebenen jeweils zugeordneten und sich diametral einander gegenüberliegenden Gehäuseöffnungen auf konstruktiv und fertigungstechnisch einfache Art ermöglicht. Grundsätzlich ist das Mehrwegeventil nach Art, Funktionsweise, Material, Dimensionierung, Form und Anordnung in weiten geeigneten Grenzen frei wählbar.

Eine vorteilhafte Weiterbildung des erfindungsgemäßen Mehrwegeventils sieht vor, dass die ersten Verbindungskanäle und/oder zweiten Verbindungskanäle jeweils als eine bogenförmige, bevorzugt als eine kreisbogenförmige, Ausnehmung des Ventilkörpers ausgebildet sind. Hierdurch sind die ersten und/oder zweiten Verbindungskanäle auf eine konstruktiv einfache Art und Weise und darüber hinaus platzsparend realisiert.

Eine weitere vorteilhafte Weiterbildung des erfindungsgemäßen Mehrwegeventils sieht vor, dass das Mehrwegeventil derart ausgebildet ist, dass mittels des Mehrwegeventils gleichzeitig drei externe Fluidkreisläufe ansteuerbar sind, wobei jeder der drei externen Fluidkreisläufe mittels der externen Strömungskanäle mit mindestens zwei voneinander verschiedenen Gehäuseöffnungen strömungsleitend verbunden ist, bevorzugt, dass mindestens einer der drei externen Fluidkreisläufe einen als Bypasskanal ausgebildeten externen Strömungskanal für mindestens eine Komponente dieses externen Fluidkreislaufs aufweist, wobei der Bypasskanal separat an einer der Gehäuseöffnungen des Mehrwegeventils strömungsleitend angeschlossen ist. Hierdurch ist es beispielsweise möglich, auch sehr komplexe Fluidsysteme mit Fluidkreisläufen lediglich mit einem einzigen erfindungsgemäßen Mehrwegeventil anzusteuern. Dies gilt insbesondere für die bevorzugte Ausführungsform.

Grundsätzlich ist die Dichtung nach Art, Funktionsweise, Material, Dimensionierung und Anordnung in weiten geeigneten Grenzen frei wählbar.

Eine vorteilhafte Weiterbildung des erfindungsgemäßen Mehrwegeventils sieht vor, dass die Dichtung als ein integraler Bestandteil des Gehäuses und/oder des Ventilkörpers ausgebildet ist. Auf diese Weise entfällt die separate Lagerhaltung und Logistik sowie die Montage der Dichtung zwischen dem Gehäuse und dem Ventilkörper.

Eine dazu alternative vorteilhafte Weiterbildung des erfindungsgemäßen Mehrwegeventils sieht vor, dass die Dichtung als ein separates Bauteil des Mehrwegeventils ausgebildet ist. Hierdurch ist es möglich, die Dichtung speziell auf deren Dichtfunktion anzupassen und nicht etwa einen Kompromiss zwischen der Dichtfunktion und der Verbindung der Dichtung mit dem Gehäuse und/oder dem Ventilkörper bei der Auswahl der Dichtung zu finden. Ferner ist die als separates Bauteil ausgebildete Dichtung auch separat austauschbar.

Auch der Ventilkörper ist nach Art, Material, Form und Dimensionierung in weiten geeigneten Grenzen frei wählbar.

Erfindungsgemäß ist der Ventilkörper einteilig ausgebildet **.** Auf diese Weise entfällt, im Unterschied zu einem als mehrteiliges Bauteil ausgebildeten Ventilkörper, der Montageaufwand bei dem Ventilkörper. Entsprechend reduziert sich der Montageaufwand insgesamt. Auch die Lagerhaltung und die Logistik ist dadurch weiter vereinfacht.

Anhand der beigefügten, grob schematischen Zeichnung wird die Erfindung nachfolgend näher erläutert. Dabei zeigt:
- Fig. 1: ein erstes Ausführungsbeispiel eines nicht erfindungsgemäßen Mehrwegeventils in einer perspektivischen Explosionsdarstellung,
- Fig. 2: das erste Ausführungsbeispiel in einer Draufsicht,
- Fig. 3: das erste Ausführungsbeispiel in einer geschnittenen Seitenansicht entlang der Schnittlinie A-A in Fig. 2,
- Fig. 4a: das Mehrwegeventil des ersten Ausführungsbeispiels in einer teilweisen perspektivischen Darstellung mit Blick in die erste Ebene,
- Fig. 4b: das Mehrwegeventil gemäß der Fig. 4a in einem Querschnitt in perspektivischer Darstellung,
- Fig. 5a: das Mehrwegeventil des ersten Ausführungsbeispiels in einer teilweisen perspektivischen Darstellung mit Blick auf die erste Ebene,
- Fig. 5b: das Mehrwegeventil gemäß der Fig. 5a in einem Querschnitt in perspektivischer Darstellung,
- Fig. 6a: das Mehrwegeventil des ersten Ausführungsbeispiels in einer teilweisen perspektivischen Darstellung mit Blick in die zweite Ebene,
- Fig. 6b: das Mehrwegeventil gemäß der Fig. 6a in einem Querschnitt in perspektivischer Darstellung,
- Fig. 7a: das Mehrwegeventil des ersten Ausführungsbeispiels in einer teilweisen perspektivischen Darstellung mit Blick auf die zweite Ebene,
- Fig. 7b: das Mehrwegeventil gemäß der Fig. 7a in einem Querschnitt in perspektivischer Darstellung und
- Fig. 8a bis 8f: das erste Ausführungsbeispiel in einer vereinfachten Draufsicht in voneinander verschiedenen Drehlagen des Ventilkörpers, wobei die beiden Ebenen des Ventilkörpers zusammen dargestellt sind,
- Fig. 9a und 9b: ein zweites Ausführungsbeispiel eines erfindungsgemäßen Mehrwegeventils in zwei perspektivischen Explosionsdarstellungen,
- Fig. 10a und 10b: das zweite Ausführungsbeispiel in einer perspektivischen Ansicht und in einer geschnittenen perspektivischen Ansicht,
- Fig. 11: das zweite Ausführungsbeispiel in einer Draufsicht,
- Fig. 12a: das zweite Ausführungsbeispiel in einer ersten geschnittenen Unteransicht, mit Blick auf die erste Ebene und
- Fig. 12b: das zweite Ausführungsbeispiel in einer zweiten geschnittenen Unteransicht, mit Blick auf die zweite Ebene.

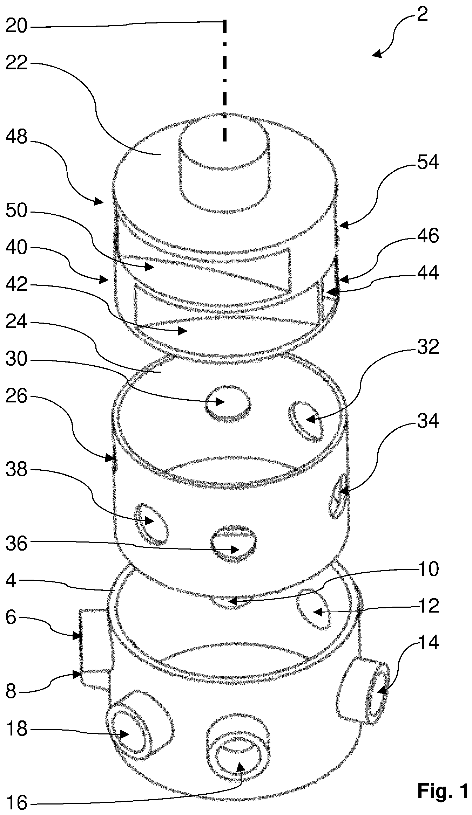

In den Fig. 1 bis 8f ist ein erstes Ausführungsbeispiel eines nicht erfindungsgemäßen Mehrwegeventils exemplarisch dargestellt.

Das Mehrwegeventil 2 umfasst ein Gehäuse 4 mit einer Mehrzahl von Gehäuseöffnungen 6, 8, 10, 12, 14, 16, 18 jeweils zur strömungsleitenden Verbindung mit einem nicht dargestellten externen Strömungskanal für ein ebenfalls nicht dargestelltes Fluid und einen in dem Gehäuse 4 um eine Drehachse 20 drehbar angeordneten Ventilkörper 22 zur strömungsleitenden Verbindung von mindestens zwei der Gehäuseöffnungen 6, 8, 10, 12, 14, 16, 18 des Gehäuses 4, wobei zwischen dem Gehäuse 4 und dem Ventilkörper 22 eine Dichtung 24 mit zu den Gehäuseöffnungen 6, 8, 10, 12, 14, 16 , 18 in dem Gehäuse 4 korrespondierenden Dichtungsöffnungen 26, 28, 30, 32, 34, 36, 38 zur Abdichtung der strömungsleitenden Verbindungen gegenüber der freien Umgebung angeordnet ist, und wobei der Ventilkörper 22 eine erste Ebene 40 mit drei ersten Verbindungskanälen 42, 44, 46 und eine parallel zu der ersten Ebene 40 angeordnete zweite Ebene 48 mit drei Verbindungskanälen 50, 52, 54 aufweist, wobei die Verbindungskanäle 42, 44, 46, 50, 52, 54 voneinander strömungstechnisch getrennt sind und mittels einer Drehung des Ventilkörpers 22 in eine jeweils vorher festgelegte Drehlage des Ventilkörpers 22 jeweils mit mindestens zwei der Gehäuseöffnungen 6, 8, 10, 12, 14, 16, 18 des Gehäuses 4 strömungsleitend verbindbar sind. Der Ventilkörper 22 ist einteilig ausgebildet und wird mittels eines nicht dargestellten Antriebs auf dem Fachmann bekannte Weise automatisch um dessen Drehachse 20 in vorher festgelegter Weise gedreht. Die Dichtung 24 ist als eine separate Dichtung ausgebildet.

Bei dem vorliegenden Ausführungsbeispiel handelt es sich um ein Mehrwegeventil für ein als Hybrid- oder Elektrofahrzeug ausgebildetes Landfahrzeug, wobei mittels des Mehrwegeventils 2 in gewünschter Weise eine Mehrzahl von voneinander verschiedenen Fluidkreisläufen eines Fluidsystems des Hybrid- oder Elektrofahrzeugs gleichzeitig angesteuert werden können, was nachfolgend noch näher erläutert ist. Das Fluidsystem mit den Fluidkreisläufen ist nicht näher dargestellt. Beispielsweise kann es sich dabei um Kühlkreisläufe oder Heizkreisläufe handeln, wobei einer der Fluidkreisläufe auch als ein Kühl- und Heizkreislauf ausgebildet sein kann.

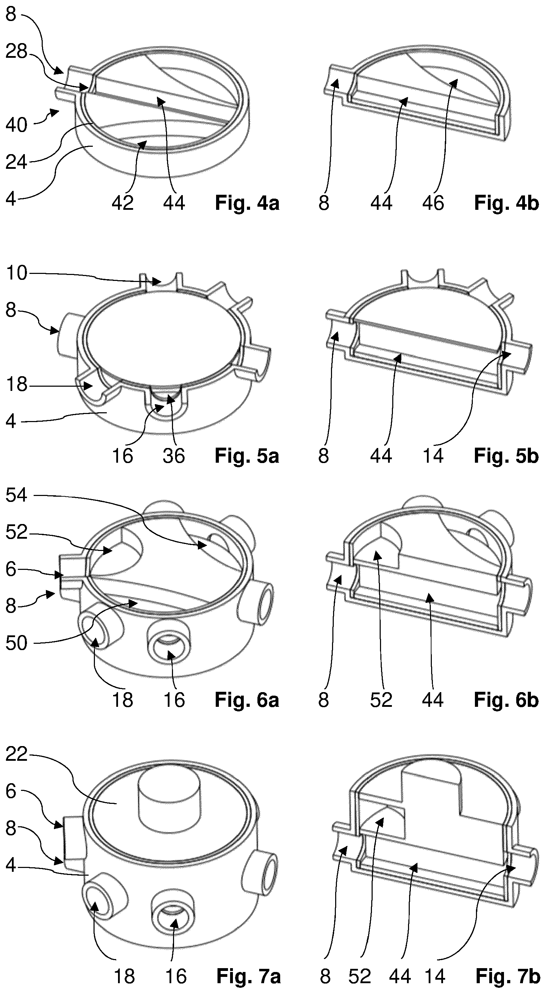

Wie aus der Fig. 4a deutlich hervorgeht, ist der erste Verbindungskanal 44 als ein zentraler Kanal ausgebildet, wobei die beiden übrigen ersten Verbindungskanäle 42 und 46 jeweils zu beiden Seiten des zentralen Kanals 44 angeordnet sind, und wobei die beiden jeweils zu beiden Seiten des zentralen Kanals 44 angeordneten ersten Verbindungskanäle 42, 46 jeweils als eine kreisbogenförmige Ausnehmung des Ventilkörpers 22 ausgebildet sind.

Im Unterschied dazu sind alle zweiten Verbindungskanäle 50, 52, 54 jeweils als eine kreisbogenförmige Ausnehmung des Ventilkörpers 22 ausgebildet. Siehe hierzu insbesondere die Fig. 6a.

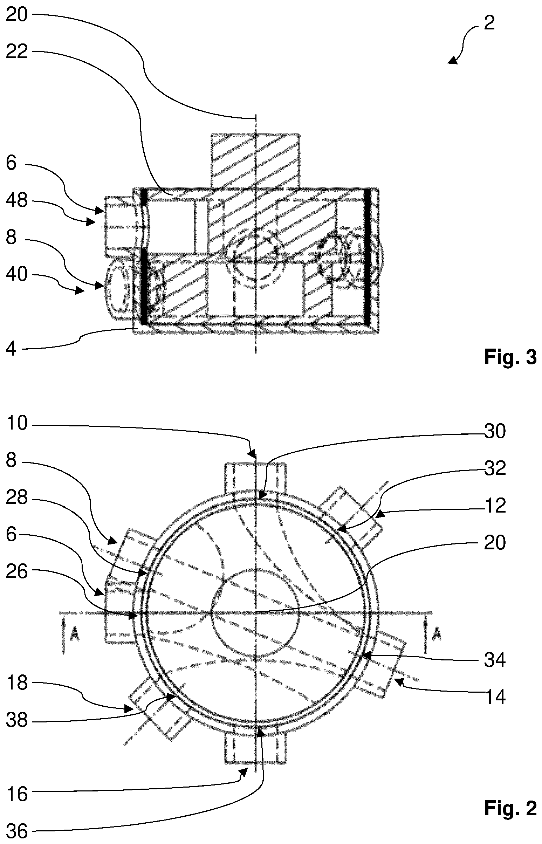

Die Gehäuseöffnungen 6, 8, 10, 12, 14, 16, 18, die Dichtungsöffnungen 26, 28, 30, 32, 34, 36, 38 und die Verbindungskanäle 42, 44, 46, 50, 52, 54 sind darüber hinaus derart aufeinander abgestimmt ausgebildet und angeordnet, dass die Gehäuseöffnungen 6, 8, 10, 12, 14, 16 , 18 und die Dichtungsöffnungen 26, 28, 30, 32, 34, 36, 38 zumindest teilweise mit den ersten und den zweiten Verbindungskanälen 42, 44, 46, 50, 52, 54, nämlich teilweise mit den ersten Verbindungskanälen 42, 44, 46, teilweise mit den zweiten Verbindungskanälen 50, 52, 54 und teilweise mit den ersten und den zweiten Verbindungskanälen 42, 44, 46, 50, 52, 54, strömungsleitend verbindbar sind. Beispielsweise sind bei dem vorliegenden Ausführungsbeispiel die Gehäuseöffnung 8 mit der dazu korrespondierenden Dichtungsöffnung 28 lediglich mit den ersten Verbindungskanälen 42, 44, 46 der ersten Ebene 40 strömungsleitend verbindbar, während die Gehäuseöffnung 6 mit der dazu korrespondierenden Dichtungsöffnung 26 lediglich mit den zweiten Verbindungskanälen 50, 52, 54 der zweiten Ebene 48 strömungsleitend verbindbar sind. Siehe hierzu die Fig. 2 in Verbindung mit der Fig. 3 sowie die Fig. 4a in Verbindung mit der Fig. 5a und die Fig. 6a in Verbindung mit der Fig. 7a. Im Unterschied dazu sind die übrigen Gehäuseöffnungen 10, 12, 14, 16, 18 und die dazu korrespondierenden Dichtungsöffnungen 30, 32, 34, 36, 38 mit den Verbindungskanälen 42, 44, 46, 50, 52, 54 beider Ebenen 40, 48 des Verbindungskörpers 22 strömungsleitend verbindbar. Siehe hierzu insbesondere die Fig. 5a.

Wie nachfolgend noch näher erläutert wird, ist das Mehrwegeventil 2 gemäß dem vorliegenden Ausführungsbeispiel derart ausgebildet, dass mittels des Mehrwegeventils 2 gleichzeitig drei nicht dargestellte externe Fluidkreisläufe ansteuerbar sind, wobei jeder der drei externen Fluidkreisläufe mittels der ebenfalls nicht dargestellten externen Strömungskanäle mit mindestens zwei voneinander verschiedenen Gehäuseöffnungen 6, 8, 10, 12, 14, 16, 18 strömungsleitend verbunden ist. In bevorzugter Weise weist einer der drei externen Fluidkreisläufe einen als Bypasskanal ausgebildeten externen Strömungskanal für mindestens eine Komponente dieses externen Fluidkreislaufs auf, wobei der ebenfalls nicht dargestellte Bypasskanal separat an der Gehäuseöffnung 8 des Mehrwegeventils 2 strömungsleitend angeschlossen ist. Bei dem vorliegenden Ausführungsbeispiel ist der den Bypasskanal aufweisende externe Fluidkreislauf somit auf der einen Seite über die Gehäuseöffnung 18 und auf der anderen Seite an die Gehäuseöffnung 6 und mittels des Bypasskanals zusätzlich an die Gehäuseöffnung 8 strömungsleitend an das Mehrwegeventil 2 angeschlossen. Die beiden anderen externen Fluidkreisläufe sind jeweils lediglich mit zwei Gehäuseöffnungen des Mehrwegeventils 2 strömungsleitend verbunden, nämlich zum einen ist einer der beiden externen Fluidkreisläufe mit den Gehäuseöffnungen 10 und 12 und zum anderen ist der andere der beiden verbleibenden externen Fluidkreisläufe mit den Gehäuseöffnungen 14 und 16 strömungsleitend verbunden.

Im Nachfolgenden wird die Funktionsweise des nicht erfindungsgemäßen Mehrwegeventils gemäß dem vorliegenden Ausführungsbeispiel anhand der Fig. 1 bis 8f näher erläutert.

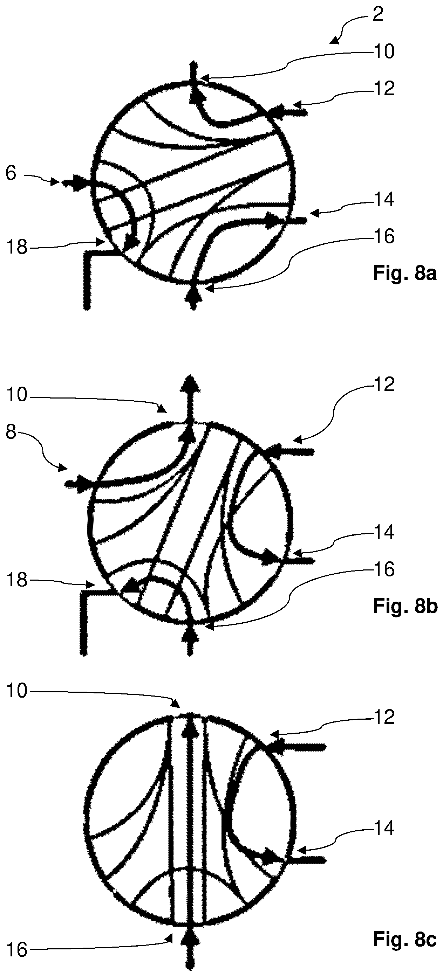

In den Fig. 8a bis 8f ist das Mehrwegeventil 2 in voneinander verschiedenen Drehlagen bei dessen Drehung um die Drehachse 20 jeweils in einer Draufsicht dargestellt.

Die Pfeile in den Fig. 8a bis 8f symbolisieren hierbei die Strömungsrichtung der jeweils durch die Gehäuseöffnungen 6, 8, 10, 12, 14, 16, 18, die dazu korrespondierenden Dichtungsöffnungen 26, 28, 30, 32, 34, 36, 38 und die mit diesen jeweils strömungsleitend verbundenen ersten und zweiten Verbindungskanälen 42, 44, 46, 50, 52, 54 der ersten und der zweiten Ebene 40, 48 des Ventilkörpers 22 strömenden Fluide. Siehe hierzu in Ergänzung zu den nachfolgenden Erläuterungen jeweils auch die Fig. 1 bis 7b.

Entsprechend sind mittels des Mehrwegeventils 2 in dessen in der Fig. 8a dargestellten Drehlage die Gehäuseöffnung 6 und die dazu korrespondierende Dichtungsöffnung 26 via des zweiten Verbindungskanals 52 mit der Gehäuseöffnung 18 und der dazu korrespondierenden Dichtungsöffnung 38, die Gehäuseöffnung 12 und die dazu korrespondierende Dichtungsöffnung 32 via des ersten Verbindungskanals 46 und des zweiten Verbindungskanals 54 mit der Gehäuseöffnung 10 und der dazu korrespondierenden Dichtungsöffnung 30 und die Gehäuseöffnung 16 und die dazu korrespondierende Dichtungsöffnung 36 via des ersten Verbindungskanals 42 und des zweiten Verbindungskanals 50 mit der Gehäuseöffnung 14 und der dazu korrespondierenden Dichtungsöffnung 34 jeweils strömungsleitend verbunden.

Gemäß der in der Fig. 8b dargestellten Drehlage des Mehrwegeventils 2 ist die Gehäuseöffnung 8 und die dazu korrespondierende Dichtungsöffnung 28 via des zweiten Verbindungskanals 54 mit der Gehäuseöffnung 10 und der dazu korrespondierenden Dichtungsöffnung 30, die Gehäuseöffnung 12 und die dazu korrespondierende Dichtungsöffnung 32 via des ersten Verbindungskanals 42 und des zweiten Verbindungskanals 50 mit der Gehäuseöffnung 14 und der dazu korrespondierenden Dichtungsöffnung 34 und die Gehäuseöffnung 16 und die dazu korrespondierende Dichtungsöffnung 36 via des zweiten Verbindungskanals 52 mit der Gehäuseöffnung 18 und der dazu korrespondierenden Dichtungsöffnung 38 jeweils strömungsleitend verbunden.

Gemäß der in der Fig. 8c dargestellten Drehlage des Mehrwegeventils 2 ist die Gehäuseöffnung 16 und die dazu korrespondierende Dichtungsöffnung 36 via des ersten Verbindungskanals 44 mit der Gehäuseöffnung 10 und der dazu korrespondierenden Dichtungsöffnung 30 und die Gehäuseöffnung 12 und die dazu korrespondierende Dichtungsöffnung 32 via des ersten Verbindungskanals 42 und des zweiten Verbindungskanals 50 mit der Gehäuseöffnung 14 und der dazu korrespondierenden Dichtungsöffnung 34 jeweils strömungsleitend verbunden.

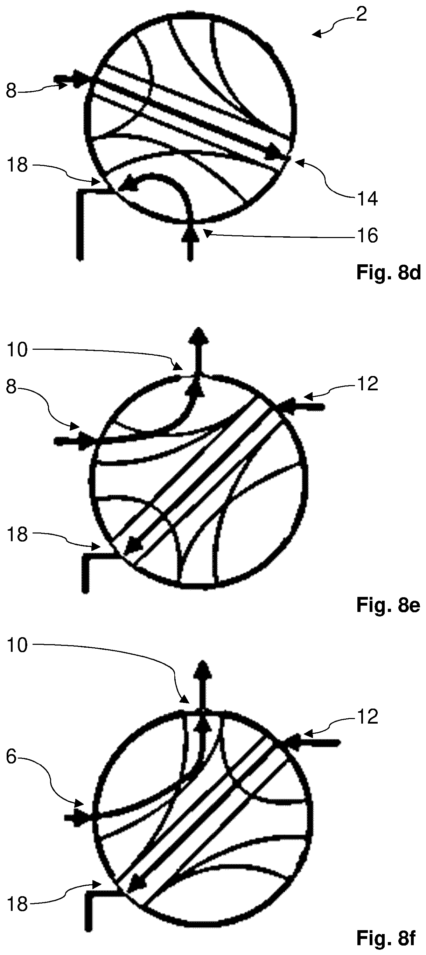

Gemäß der in der Fig. 8d dargestellten Drehlage des Mehrwegeventils 2 ist die Gehäuseöffnung 8 und die dazu korrespondierende Dichtungsöffnung 28 via des ersten Verbindungskanals 44 mit der Gehäuseöffnung 14 und der dazu korrespondierenden Dichtungsöffnung 34 und die Gehäuseöffnung 16 und die dazu korrespondierende Dichtungsöffnung 36 via des ersten Verbindungskanals 42 und des zweiten Verbindungskanals 50 mit der Gehäuseöffnung 18 und der dazu korrespondierenden Dichtungsöffnung 38 jeweils strömungsleitend verbunden.

Gemäß der in der Fig. 8e dargestellten Drehlage des Mehrwegeventils 2 ist die Gehäuseöffnung 8 und die dazu korrespondierende Dichtungsöffnung 28 via des ersten Verbindungskanals 46 mit der Gehäuseöffnung 10 und der dazu korrespondierenden Dichtungsöffnung 30 und die Gehäuseöffnung 12 und die dazu korrespondierende Dichtungsöffnung 32 via des ersten Verbindungskanals 44 mit der Gehäuseöffnung 18 und der dazu korrespondierenden Dichtungsöffnung 38 jeweils strömungsleitend verbunden.

Gemäß der in der Fig. 8f dargestellten Drehlage des Mehrwegeventils 2 ist die Gehäuseöffnung 6 und die dazu korrespondierende Dichtungsöffnung 26 via des zweiten Verbindungskanals 50 mit der Gehäuseöffnung 10 und der dazu korrespondierenden Dichtungsöffnung 30 und die Gehäuseöffnung 12 und die dazu korrespondierende Dichtungsöffnung 32 via des ersten Verbindungskanals 44 mit der Gehäuseöffnung 18 und der dazu korrespondierenden Dichtungsöffnung 38 jeweils strömungsleitend verbunden.

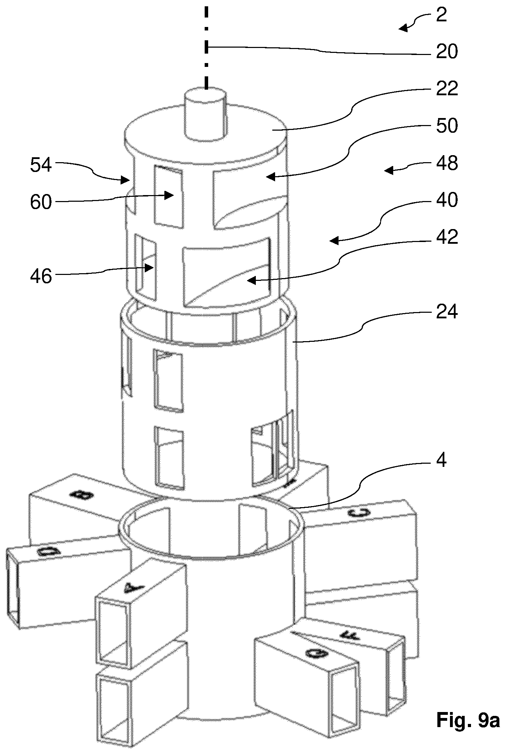

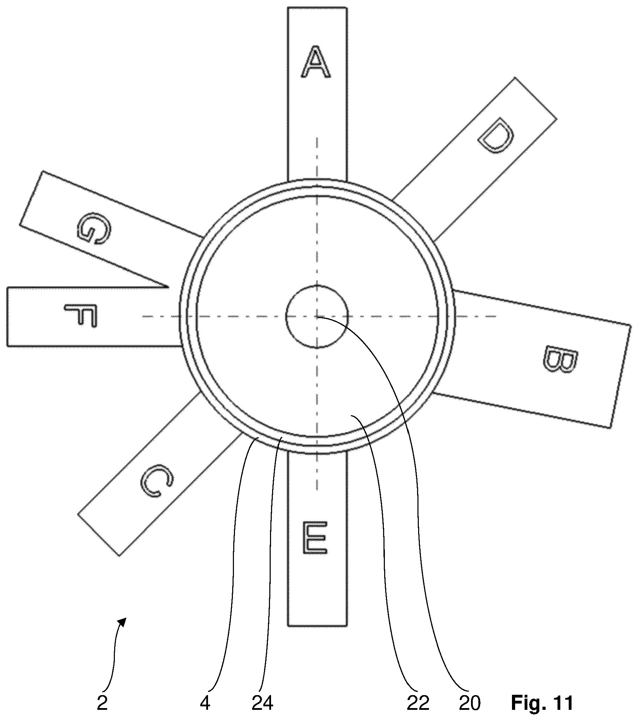

In den Fig. 9a bis 12b ist ein zweites Ausführungsbeispiel eines erfindungsgemäßen Mehrwegeventils ebenfalls rein exemplarisch dargestellt. Die Bezeichnungen der Ausführungsbeispiele als erstes und zweites Ausführungsbeispiel dienen lediglich der leichteren Unterscheidbarkeit des erfindungsgemäßen Ausführungsbeispiels von dem nicht erfindungsgemäßen Ausführungsbeispiel.

Das Mehrwegeventil 2 des zweiten Ausführungsbeispiels ist vom grundsätzlichen Aufbau mit dem Mehrwegeventil 2 des ersten Ausführungsbeispiels vergleichbar, so dass hier weitgehend auf die obigen Erläuterungen zu dem ersten Ausführungsbeispiel verwiesen werden kann. Entsprechend ergänzen sich die Erläuterungen zu dem ersten und zu dem zweiten Ausführungsbeispiel, so dass, beispielsweise im Hinblick auf andere Ausführungsformen der Erfindung, die Einzelheiten des ersten und des zweiten Ausführungsbeispiels miteinander ganz oder teilweise kombiniert werden können.

Die Ausführungen zu dem zweiten Ausführungsbeispiel werden deshalb lediglich im Umfang der Unterschiede zu dem ersten Ausführungsbeispiel erläutert. Ansonsten wird, wie oben bereits ausgeführt, auf die Erläuterungen zu dem ersten Ausführungsbeispiel verwiesen. Gleiche oder gleichwirkende Bauteile sind mit den gleichen Bezugszeichen versehen.

Im Wesentlichen unterscheidet sich das zweite Ausführungsbeispiel von dem ersten Ausführungsbeispiel durch die Anzahl und Anordnung der Gehäuseöffnungen, der dazu korrespondierenden Dichtungsöffnungen und der ersten und zweiten Verbindungskanäle. Ferner besteht ein wesentlicher Unterschied zu dem ersten Ausführungsbeispiel darin, dass der Ventilkörper 22 anstelle des als zentraler Kanal ausgebildeten ersten Verbindungskanals 44 einen dritten Verbindungskanal 60 aufweist, wobei sich der dritte Verbindungskanal 60 über die erste und die zweite Ebene 40, 48 erstreckt, nämlich derart, dass der dritte Verbindungskanal 60 als ein zentraler Kanal ausgebildet ist. Entsprechend ermöglicht die Ausführungsform der Erfindung, also das zweite Ausführungsbeispiel, andere fluidleitende Verbindungen zwischen externen Strömungskanälen von Fluidkreisläufen.

Zwecks leichterer Orientierung in den Fig. 9a bis 12b und besserer Unterscheidbarkeit zu dem ersten Ausführungsbeispiel sind die Gehäuseöffnungen mit Buchstaben als Bezugszeichen bezeichnet, wobei die diesen zugeordneten Dichtungsöffnungen nicht extra mit Bezugszeichen bezeichnet sind.

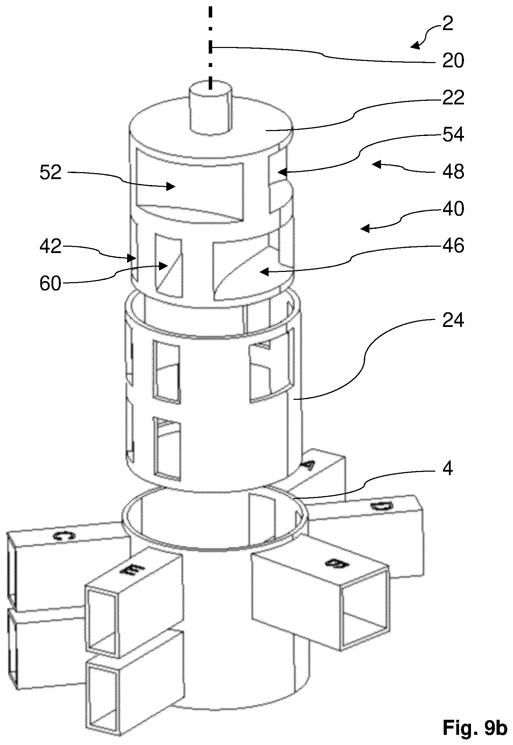

Das Mehrwegeventil 2 weist hier insgesamt zehn Gehäuseöffnungen auf, nämlich Gehäuseöffnung A oben, A unten, B, C oben, C unten, D, E oben, E unten, F und G, wobei die Gehäuseöffnung A oben, B, C oben, D und E oben der zweiten Ebene 48 des Ventilkörpers 22 und die Gehäuseöffnungen A unten, C unten, E unten, F und G der ersten Ebene 40 des Ventilkörpers 22 zugeordnet sind. Siehe hierzu insbesondere die Fig. 9a und 9b. Die Dichtungsöffnungen der Dichtung 24 korrespondieren zu den vorgenannten Gehäuseöffnungen und sind deshalb nicht explizit bezeichnet. Anders als bei dem ersten Ausführungsbeispiel sind bei dem vorliegenden Ausführungsbeispiel keine Gehäuseöffnungen sowohl der ersten Ebene 40 wie auch der zweiten Ebene 48 des Ventilkörpers 22 zugeordnet. In anderen Ausführungsformen der Erfindung sind aber auch derartige Gehäuseöffnungen und dazu korrespondierende Dichtungsöffnungen denkbar.

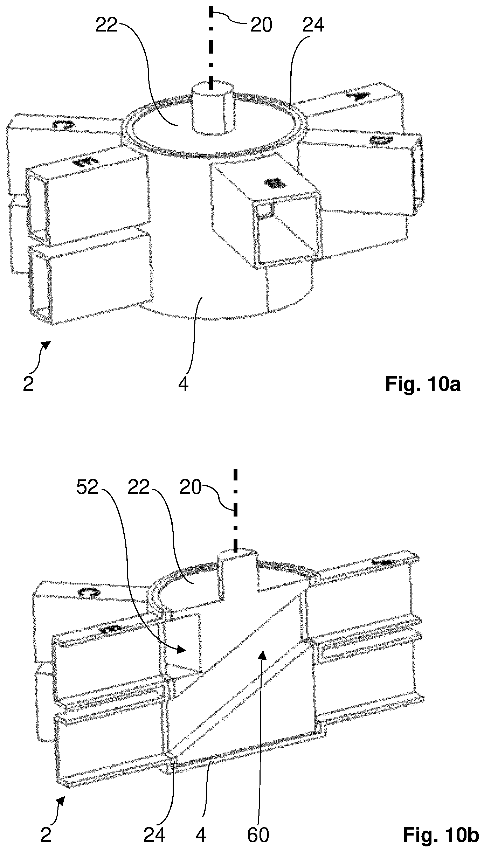

In den Fig. 10a bis 12 ist das Mehrwegeventil 2 des zweiten Ausführungsbeispiels in einer Zusammenbaulage, also im montierten Zustand des Mehrwegeventils 2, gezeigt.

Der Verlauf des dritten Verbindungskanals 60, nämlich dessen Erstreckung sowohl über die erste wie auch über die zweite Ebene 40, 48 des Ventilkörpers 22, ist aus der Fig. 10b gut ersichtlich.

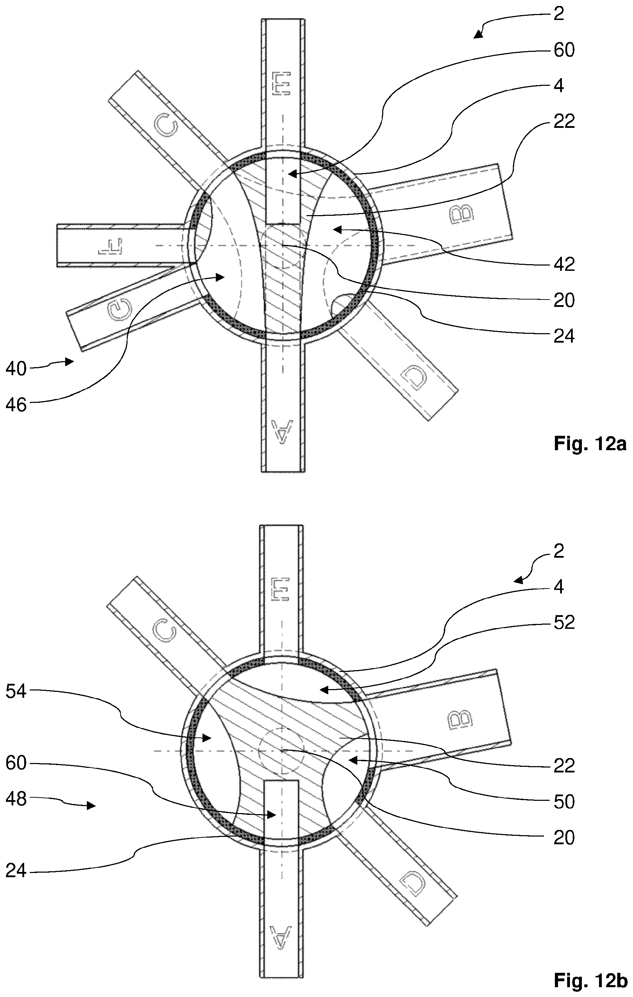

Die Fig. 12a zeigt das Mehrwegeventil 2 in einem ersten Querschnitt, nämlich dahingehend, dass die erste Ebene 40 des Ventilkörpers 22 sichtbar ist. Wie daraus hervorgeht, sind in der ersten Ebene 40 des Ventilkörpers 22 neben dem oben genannten dritten Verbindungskanal 60 zusätzlich zwei erste Verbindungskanäle 42, 46 angeordnet. Anders als der dritte Verbindungskanal 60 erstrecken sich die ersten Verbindungskanäle 42, 46 lediglich über die erste Ebene 40 des Ventilkörpers 22.

Analog dazu zeigt die Fig. 12b das Mehrwegeventil 2 in einem zweiten Querschnitt, nämlich dahingehend, dass die zweite Ebene 48 des Ventilkörpers 22 sichtbar ist. Wie daraus hervorgeht, sind in der zweiten Ebene 48 des Ventilkörpers 22 neben dem oben genannten dritten Verbindungskanal 60 zusätzlich drei zweite Verbindungskanäle 50, 52, 54 angeordnet. Anders als der dritte Verbindungskanal 60 erstrecken sich die zweiten Verbindungskanäle 50, 52, 54 lediglich über die zweite Ebene 48 des Ventilkörpers 22.

Wie nachfolgend noch näher erläutert wird, ist das Mehrwegeventil 2 gemäß dem vorliegenden zweiten Ausführungsbeispiel, analog zu dem ersten Ausführungsbeispiel, derart ausgebildet, dass mittels des Mehrwegeventils 2 gleichzeitig drei nicht dargestellte externe Fluidkreisläufe ansteuerbar sind, wobei jeder der drei externen Fluidkreisläufe mittels der ebenfalls nicht dargestellten externen Strömungskanäle mit mindestens zwei voneinander verschiedenen Gehäuseöffnungen A oben, A unten, B, C oben, C unten, D, E oben, E unten, F und G strömungsleitend verbunden ist. In bevorzugter Weise kann mindestens einer der drei externen Fluidkreisläufe einen als Bypasskanal ausgebildeten externen Strömungskanal für mindestens eine Komponente dieses externen Fluidkreislaufs aufweisen, wobei der ebenfalls nicht dargestellte Bypasskanal separat an einer der Gehäuseöffnungen A oben, A unten, B, C oben, C unten, D, E oben, E unten, F und G des Mehrwegeventils 2 strömungsleitend angeschlossen sein kann.

Im Nachfolgenden wird die Funktionsweise des erfindungsgemäßen Mehrwegeventils gemäß dem vorliegenden Ausführungsbeispiel anhand der Fig. 9a bis 12b näher erläutert.

Beispielsweise sind mittels des Mehrwegeventils 2 in dessen in den Fig. 12a und 12b dargestellten Drehlage die Gehäuseöffnungen C unten und G mittels der dazu korrespondierenden Dichtungsöffnungen der Dichtung 24 und des ersten Verbindungskanals 46, die Gehäuseöffnungen E unten und A oben mittels der dazu korrespondierenden Dichtungsöffnungen der Dichtung 24 und des dritten Verbindungskanals 60 und die Gehäuseöffnungen B und D mittels der dazu korrespondierenden Dichtungsöffnungen der Dichtung 24 und des zweiten Verbindungskanals 50 strömungsleitend verbunden. Siehe hierzu auch die Fig. 10b. Die übrigen Gehäuseöffnungen, nämlich die Gehäuseöffnung A unten, F, C oben und E oben sind mittels des Ventilkörpers 22, wie aus den Fig. 12a und 1b ersichtlich, blockiert.

Analog zu dem ersten Ausführungsbeispiel sind mittels des Mehrwegeventils 2 des zweiten Ausführungsbeispiels noch eine Vielzahl von weiteren strömungsleitenden Verbindungen zwischen mindestens zwei der Gehäuseöffnungen A oben, A unten, B, C oben, C unten, D, E oben, E unten, F und G herstellbar oder trennbar, also blockierbar. Entsprechend verstehen sich die obigen Erläuterungen rein exemplarisch. Somit lassen sich auch mittels des Mehrwegeventils 2 gemäß dem zweiten Ausführungsbeispiel eine Vielzahl von voneinander verschiedenen Strömungsverbindungen zwischen externen Strömungskanälen von externen Fluidkreisläufen herstellen oder voneinander trennen.

Wie aus den obigen Ausführungen hervorgeht, ist es mittels des erfindungsgemäßen Mehrwegeventils möglich, die drei externen Fluidkreisläufe in einer Vielzahl von möglichen Kombinationen beispielsweise miteinander zu verschalten, also strömungstechnisch miteinander zu verbinden. Das erfindungsgemäße Mehrwegeventil ermöglicht es, die externen Fluidkreisläufe jeweils zu schließen oder zu öffnen, miteinander zu verbinden oder voneinander zu trennen.

Die Erfindung ist nicht auf das vorliegende zweite Ausführungsbeispiel begrenzt. Beispielsweise ist die Erfindung auch bei anderen Landfahrzeugen, bei Luft- und Seefahrzeugen sowie in anderen Technikbereichen vorteilhaft einsetzbar. Ferner ist es möglich, das erfindungsgemäße Mehrwegeventil in der Konstruktion anders als bei dem vorliegenden zweiten Ausführungsbeispiel auszubilden. Beispielsweise kann die Dichtung als ein integraler Bestandteil des Gehäuses und/oder des Ventilkörpers ausgebildet sein. Siehe hierzu ferner auch die obigen Ausführungen bezüglich der Möglichkeit, lediglich bei dem nicht erfindungsgemäßen Ausführungsbeispiel, also dem ersten Ausführungsbeispiel, beschriebene und/oder gezeigte Einzelaspekte in eine erfindungsgemäße Ausführungsform des Mehrwegeventils zu integrieren.

### Bezugszeichenliste

- 2: Mehrwegeventil
- 4: Gehäuse
- 6: Gehäuseöffnung
- 8: Gehäuseöffnung
- 10: Gehäuseöffnung
- 12: Gehäuseöffnung
- 14: Gehäuseöffnung
- 16: Gehäuseöffnung
- 18: Gehäuseöffnung
- 20: Drehachse des Ventilkörpers 22
- 22: Ventilkörper
- 24: Dichtung
- 26: Dichtungsöffnung
- 28: Dichtungsöffnung
- 30: Dichtungsöffnung
- 32: Dichtungsöffnung
- 34: Dichtungsöffnung
- 36: Dichtungsöffnung
- 38: Dichtungsöffnung
- 40: Erste Ebene des Ventilkörpers 22
- 42: Erster Verbindungskanal
- 44: Erster Verbindungskanal
- 46: Erster Verbindungskanal
- 48: Zweite Ebene des Ventilkörpers 22
- 50: Zweiter Verbindungskanal
- 52: Zweiter Verbindungskanal
- 54: Zweiter Verbindungskanal
- 60: Dritter Verbindungskanal
- A oben: Gehäuseöffnung
- A unten: Gehäuseöffnung
- B: Gehäuseöffnung
- C oben: Gehäuseöffnung
- C unten: Gehäuseöffnung
- D: Gehäuseöffnung
- E oben: Gehäuseöffnung
- E unten: Gehäuseöffnung
- F: Gehäuseöffnung
- G: Gehäuseöffnung

## Patentansprüche

1. Mehrwegeventil (2), umfassend ein Gehäuse (4) mit einer Mehrzahl von Gehäuseöffnungen (A oben, A unten, B, C oben, C unten, D, E oben, E unten, F, G) jeweils zur strömungsleitenden Verbindung mit einem externen Strömungskanal für ein Fluid und einen in dem Gehäuse (4) um eine Drehachse (20) drehbar angeordneten Ventilkörper (22) zur strömungsleitenden Verbindung von mindestens zwei der Gehäuseöffnungen (A oben, A unten, B, C oben, C unten, D, E oben, E unten, F, G) des Gehäuses (4), wobei zwischen dem Gehäuse (4) und dem Ventilkörper (22) eine Dichtung (24) mit zu den Gehäuseöffnungen (A oben, A unten, B, C oben, C unten, D, E oben, E unten, F, G) in dem Gehäuse (4) korrespondierenden Dichtungsöffnungen zur Abdichtung der strömungsleitenden Verbindungen gegenüber der freien Umgebung angeordnet ist, und wobei der Ventilkörper (22) eine erste Ebene (40) mit mindestens einem sich lediglich über die erste Ebene (40) erstreckenden ersten Verbindungskanal (42, 46) und eine parallel zu der ersten Ebene (40) angeordnete zweite Ebene (48) mit mindestens einem sich lediglich über die zweite Ebene (48) erstreckenden zweiten Verbindungskanal (50, 52, 54) aufweist, wobei die Verbindungskanäle (42, 46, 50, 52, 54) voneinander strömungstechnisch getrennt sind und mittels einer Drehung des Ventilkörpers (22) in eine jeweils vorher festgelegte Drehlage des Ventilkörpers (22) jeweils mit mindestens zwei der Gehäuseöffnungen (A oben, A unten, B, C oben, C unten, D, E oben, E unten, F, G) des Gehäuses (4) strömungsleitend verbindbar sind, und wobei der Ventilkörper (22) mindestens einen dritten von den ersten und zweiten Verbindungskanälen (42, 46, 50, 52, 54) strömungstechnisch getrennten Verbindungskanal (60) aufweist, wobei sich der dritte Verbindungskanal (60) über die erste und die zweite Ebene (40, 48) erstreckt und als ein zentraler Kanal ausgebildet ist, der geeignet ist, um diametral einander gegenüberliegende und jeweils einer der beiden Ebenen (40, 48) zugeordnete Gehäuseöffnungen miteinander strömungsleitend zu verbinden,
**dadurch gekennzeichnet,**
**dass** der Ventilkörper einteilig ausgebildet ist und die erste Ebene (40) zwei erste Verbindungskanäle (42, 46) und die zweite Ebene (48) drei zweite Verbindungskanäle (50, 52, 54) aufweisen.

2. Mehrwegeventil (2) nach Anspruch 1,
**dadurch gekennzeichnet,**
**dass** die ersten Verbindungskanäle (42, 46) und/oder zweiten Verbindungskanäle (50, 52, 54) jeweils als eine bogenförmige, bevorzugt als eine kreisbogenförmige, Ausnehmung des Ventilkörpers (22) ausgebildet sind.

3. Mehrwegeventil (2) nach Anspruch 1 oder 2,
**dadurch gekennzeichnet,**
**dass** das Mehrwegeventil (2) derart ausgebildet ist, dass mittels des Mehrwegeventils (2) gleichzeitig drei externe Fluidkreisläufe ansteuerbar sind, wobei jeder der drei externen Fluidkreisläufe mittels der externen Strömungskanäle mit mindestens zwei voneinander verschiedenen Gehäuseöffnungen (A oben, A unten, B, C oben, C unten, D, E oben, E unten, F, G) strömungsleitend verbunden ist, bevorzugt, dass mindestens einer der drei externen Fluidkreisläufe einen als Bypasskanal ausgebildeten externen Strömungskanal für mindestens eine Komponente dieses externen Fluidkreislaufs aufweist, wobei der Bypasskanal separat an einer der Gehäuseöffnungen des Mehrwegeventils strömungsleitend angeschlossen ist.

4. Mehrwegeventil nach einem der Ansprüche 1 bis 3,
**dadurch gekennzeichnet,**
**dass** die Dichtung als ein integraler Bestandteil des Gehäuses und/oder des Ventilkörpers ausgebildet ist.

5. Mehrwegeventil (2) nach einem der Ansprüche 1 bis 3,
**dadurch gekennzeichnet,**
**dass** die Dichtung (24) als ein separates Bauteil des Mehrwegeventils (2) ausgebildet ist.

## Claims

1. Multiway valve (2) comprising a housing (4) with a plurality of housing openings (A top, A bottom, B, C top, C bottom, D, E top, E bottom, F, G), each for creating a flow-conducting connection to an external flow channel for a fluid, and a valve body (22) arranged rotatably around an axis of rotation (20) in the housing (4) for flow-conducting connection to at least two of the housing openings (A top, A bottom, B, C top, C bottom, D, E top, E bottom, F, G) of the housing (4), whereby a seal (24) is arranged between the housing (4) and the valve body (22) with seal openings corresponding to the housing openings (A top, A bottom, B, C top, C bottom, D, E top, E bottom, F, G) in the housing (4) to seal the flow-conducting connections from the external environment, and wherein the valve body (22) comprises a first plane (40) with at least one first connecting channel (42, 46) extending only over the first plane (40) and a second plane (48) arranged parallel to the first plane (40) with at least one second connecting channel (50, 52, 54) extending only over the second plane (48), wherein the connecting channels (42, 46, 50, 52, 54) are fluidically separated from one another and each can be connected in a flow-conducting manner to at least two of the housing openings (A top, A bottom, B, C top, C bottom, D, E top, E bottom, F, G) of the housing (4) by means of a rotation of the valve body (22) into a respective predetermined rotational position of the valve body (22), and wherein the valve body (22) comprises at least one third connecting channel (60) that is fluidically separated from the first and second connecting channels (42, 46, 50, 52, 54), said third connecting channel (60) extending over the first and second plane (40, 48) and is designed as a central channel suitable for creating a flow-conducting connection between diametrically opposed housing openings each belonging to one of the two planes (40, 48),
**characterised in that**
the valve body is made in one piece and the first plane (40) comprises two first connecting channels (42, 46) and the second plane (48) comprises three second connecting channels (50, 52, 54).

2. Multiway valve (2) according to claim 1,
**characterised in that**
the first connecting channels (42, 46) and/or second connecting channels (50, 52, 54) are each formed as an arc-shaped, preferably circular arc-shaped, recess in the valve body (22).

3. Multiway valve (2) according to claim 1 or claim 2,
**characterised in that**
the multiway valve (2) is designed such that three external fluid circuits can be controlled simultaneously by means of the multiway valve (2), whereby each of the three external fluid circuits is connected in a flow-conducting manner to at least two different housing openings (A top, A bottom, B, C top, C bottom, D, E top, E bottom, F, G) via the external flow channels, preferably such that at least one of the three external fluid circuits comprises an external flow channel designed as a bypass channel for at least one component of this external fluid circuit, wherein the bypass channel is connected separately to one of the housing openings of the multiway valve in a flow-conducting manner.

4. Multiway valve according to one of claims 1 to 3,
**characterised in that**
the seal is designed as an integral part of the housing and/or the valve body.

5. Multiway valve (2) according to one of claims 1 to 3,
**characterised in that**
the seal (24) is designed as a separate component of the multiway valve (2).

## Revendications

1. Soupape à voies multiples (2), comprenant un boîtier (4) avec plusieurs ouvertures de boîtier (A haut, A bas, B, C haut, C bas, D, E haut, E bas, F, G) destinées à établir une pour la liaison conductrice de l'écoulement avec un canal d'écoulement externe pour un fluide et un corps de soupape (22) disposé dans le boîtier (4) de manière à pouvoir tourner autour d'un axe de rotation (20) pour la liaison conductrice d'au moins deux des ouvertures de boîtier (A haut, A bas, B, C haut, C bas, D, E haut, E bas, F, G) du boîtier (4), dans lequel un joint d'étanchéité (24) avec des ouvertures d'étanchéité correspondant aux ouvertures du boîtier (A en haut, A en bas, B, C en haut, C en bas, D, E en haut, E en bas, F, G) dans le boîtier (4) est monté entre le boîtier (4) et le corps de soupape (22) pour assurer l'étanchéité des liaisons conductrices d'écoulement par rapport à l'environnement libre et dans lequel le corps de soupape (22) présente un premier plan (40) doté d'au moins un premier canal de liaison (42, 46) s'étendant uniquement sur le premier plan (40) et un deuxième plan (48) parallèle au premier plan (40) doté d'au moins un deuxième canal de liaison (50, 52, 54) s'étendant uniquement sur le deuxième plan (48), les canaux de liaison (42, 46, 50, 52, 54) étant séparés les uns des autres du point de vue écoulement et pouvant être reliés de manière conductrice de l'écoulement en tournant le corps de soupape (22) dans une position de rotation prédéfinie du corps de soupape (22) avec chacun au moins deux des ouvertures de boîtier (A haut, A bas, B, C haut, C bas, D, E haut, E bas, F, G) du boîtier (4), le corps de soupape (22) étant doté d'au moins un troisième canal de liaison (60) séparé des premier et deuxième canaux de liaison (42, 46, 50, 52, 54) du point de vue écoulement, le troisième canal de liaison (60) s'étendant sur le premier et le deuxième plan (40, 48), le troisième canal de liaison (60) étant de préférence conçu comme un canal central permettant de relier entre elles de manière conductrice de l'écoulement des ouvertures de boîtier diamétralement opposées et associées chacune à l'un des deux plans (40, 48),
**caractérisée en ce que**
le corps de soupape est réalisé d'une seule pièce et **en ce que** le premier plan (40) présente deux premiers canaux de liaison (42, 46) et le deuxième plan (48) trois deuxièmes canaux de liaison (50, 52, 54).

2. Soupape à voies multiples (2) selon la revendication 1,
**caractérisée en ce que**
les premiers canaux de liaison (42, 46) et/ou les deuxièmes canaux de liaison (50, 52, 54) sont réalisés chacun sous la forme d'un évidement en forme d'arc, de préférence en forme d'arc de cercle, du corps de soupape (22).

3. Soupape voies multiples (2) selon la revendication 1 ou 2,
**caractérisée en ce que**
la soupape à voies multiples (2) est conçue de telle sorte que trois circuits de fluide externes peuvent être commandés simultanément au moyen de la soupape à voies multiples (2), chacun des trois circuits de fluide externes étant relié de manière à conduire l'écoulement au moyen des canaux d'écoulement externes à au moins deux ouvertures du boîtier (A haut, A bas, B, C haut, C bas, D, E haut, E bas, F, G) différentes l'une de l'autre, et **en ce que**, de préférence, au moins l'un des trois circuits de fluide externes présente un canal d'écoulement externe conçu comme un canal de dérivation pour au moins un composant de ce circuit de fluide externe, le canal de dérivation étant raccordé séparément à l'une des ouvertures de boîtier de la soupape à voies multiples de manière à conduire l'écoulement.

4. Soupape à voies multiples selon l'une des revendications 1 à 3,
**caractérisée en ce que**
le joint d'étanchéité est conçu comme une partie intégrante du boîtier et/ou du corps de soupape.

5. Soupape à voies multiples (2) selon l'une des revendications 1 à 3,
**caractérisée en ce que**
le joint (24) est conçu comme un composant séparé de la soupape à voies multiples (2).
